# EUROPÄISCHE PATENTSCHRIFT

(11) **EP 0 875 701 B1**
(45) Veröffentlichungstag und Bekanntmachung des Hinweises auf die Patenterteilung: **12.06.2002**
(21) Anmeldenummer: 98103637.9
(22) Anmeldetag: 02.03.1998
(51) Int. Cl.: F16K 31/06

(54) **Mehrwegeventil**
Multiple-way valve
Soupape à plusieurs voies

(30) Priorität: 30.04.1997 DE 19718408
(43) Veröffentlichungstag der Anmeldung: 04.11.1998
(73) Patentinhaber: Nass Magnet GmbH, 30179 Hannover (DE)
(72) Erfinder: Fritz, Carsten, Dipl.-Ing. (FH), 30449 Hannover (DE); Rieck, Frank, 31303 Burgdorf (DE)
(74) Vertreter: Tetzner, Michael, Dipl.-Ing.

(56) Entgegenhaltungen:
- DE-A- 4 432 588
- DE-A- 19 600 816
- DE-U- 7 324 333
- US-A- 4 474 212
- US-A- 4 545 563
- US-A- 5 040 567

## Beschreibung

Die Erfindung betrifft ein Mehrwegeventil gemäß dem Oberbegriff des Anspruches 1.

Aus der DE-A-44 05 657 ist ein Mehrwegeventil bekannt, das als Magnetventil ausgebildet ist. Es besteht im wesentlichen aus einem Ventilgehäuse, in dem ein erster und ein zweiter Ventilsitz ausgebildet ist, und einem Betätigungselement, das einen ersten und einen zweiten, mit jeweils einem der beiden Ventilsitze zusammenwirkenden Schließkörper aufweist und das derart schwenkbar gelagert ist, daß in einer ersten Schaltstellung der erste Schließkörper mit dem ersten Ventilsitz und in der zweiten Schaltstellung der zweite Schließkörper mit dem zweiten Ventilsitz in Kontakt kommt. Das Betätigungselement ist dabei als Klappanker ausgebildet, der durch Ansteuerung eines Elektromagneten und einer Rückstellfeder zwischen den beiden Schaltstellungen verschwenkt werden kann.

In Abhängigkeit von der Verwendung des Ventils und den herrschenden Druckverhältnissen ist unter Umständen bei einem Schließkörper im Vergleich zum anderen Schließkörper eine wesentlich höhere Kraft erforderlich, um ihn von seinem Ventilsitz abzuheben. Bei vielen Anwendungen ist es jedoch erforderlich, daß beide Schließkörper mit annähernd gleich großem Hub abgehoben werden, um die Entlüftungszeiten gering zu halten.

Bei häufigen Schaltvorgängen des Elektromagneten ist daher eine relativ hohe Leistung erforderlich.

Der Erfindung liegt daher die Aufgabe zugrunde, das Mehrwegeventil gemäß dem Oberbegriff des Anspruches 1 derart weiterzubilden, daß der Schaltvorgang mit einer geringeren Leistung ermöglicht wird.

Erfindungsgemäß wird diese Aufgabe durch das kennzeichnende Merkmal des Anspruches 1 gelöst, in dem das Betätigungselement zwei Schwenkachsen aufweist, wobei sich das Betätigungselement beim Schwenken von der einen zur anderen Schaltstellung zunächst um eine und anschließend um die andere Schwenkachse dreht. Die Schwenkachsen sind dabei so angeordnet, daß die erste Schwenkachse einen größeren Hebelarm und dadurch eine größere Kraft zum Abheben des Schließkörpers vom Ventilsitz gewährleistet, während die zweite Schwenkachse den ausreichenden Hub des Schließkörpers ermöglicht.

Weitere Ausgestaltungen und Vorteile der Erfindung sind Gegenstand der Unteransprüche und werden anhand der Beschreibung eines Ausführungsbeispieles und der Zeichnung näher erläutert.
- Fig.1: eine teilweise geschnittene Darstellung eines Ausführungsbeispieles der Erfindung mit einem Elektromagneten als Betätigungseinrichtung,
- Fig.2 bis 4: geschnittene Detailansichten im Bereich des Ventilgehäuses mit verschiedenen Stellungen des Betätigungselements.

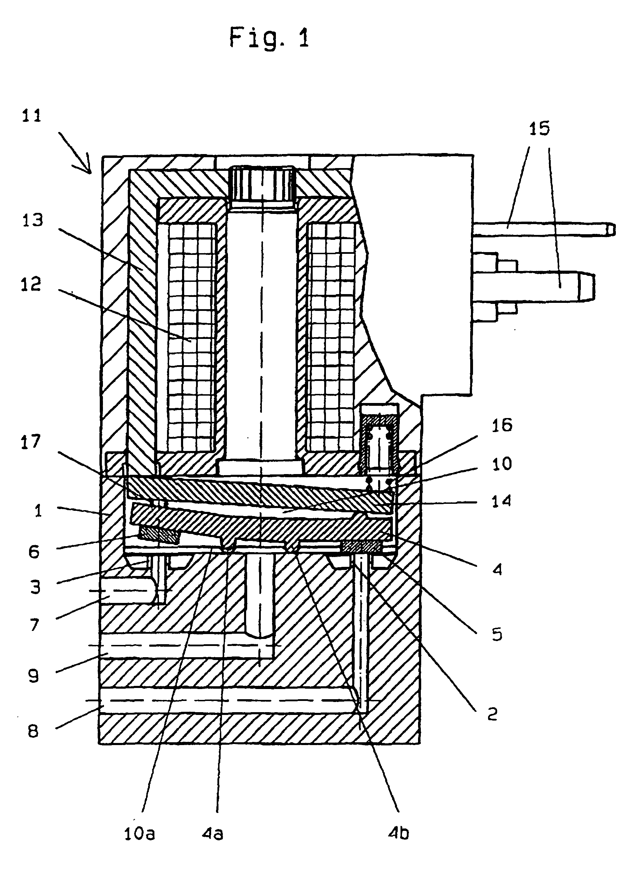

In Fig.1 ist ein erfindungsgemäßes Mehrwegeventil beispielhaft als 3/2-Wege-Magnetventil dargestellt.

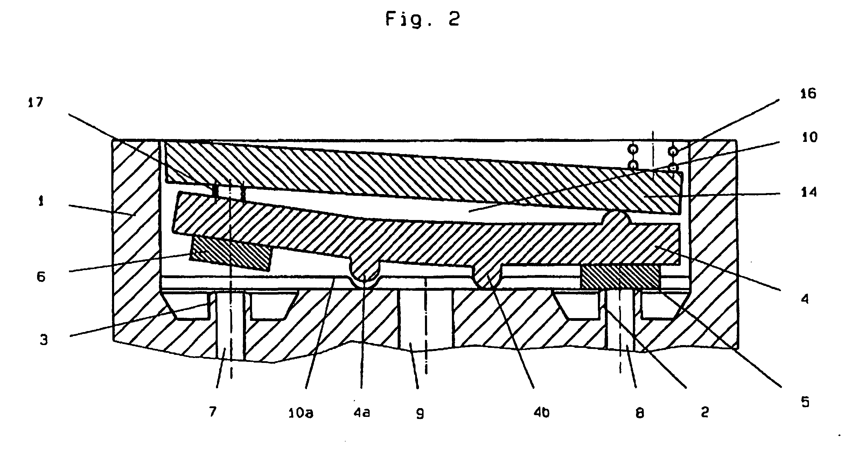

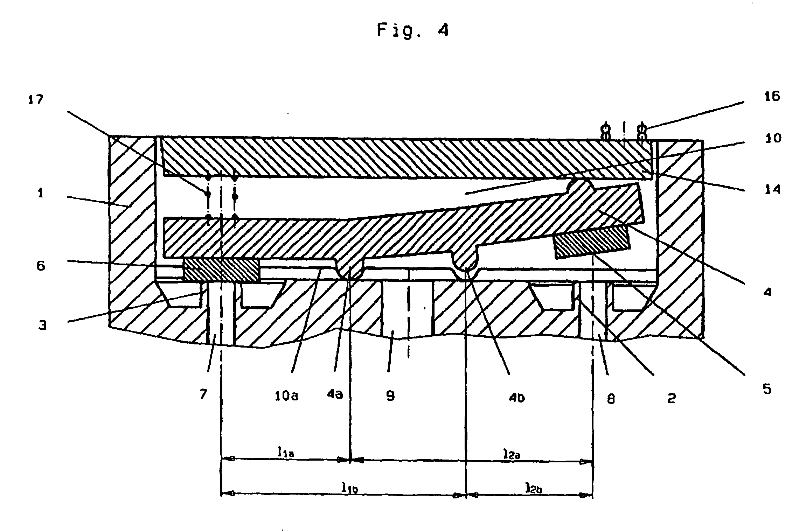

Es weist ein Ventilgehäuse 1 mit einer Ventilkammer 10 auf, in der ein erster und ein zweiter Ventilsitz 2, 3 ausgebildet ist. Es ist ferner ein Betätigungselement 4 vorgesehen, das einen ersten und einen zweiten, mit jeweils einem der beiden Ventilsitze 2, 3 zusammenwirkenden Schließkörper 5, 6 aufweist und das derart schwenkbar gelagert ist, daß in einer ersten Schaltstellung (Fig.2) der erste Schließkörper 5 mit dem ersten Ventilsitz 2 und in der zweiten Schaltstellung (Fig.4) der zweite Schließkörer 6 mit dem zweiten Ventilsitz 3 in Kontakt kommt. Die beiden Schließkörper 5, 6 sind derart ausgebildet, daß sie auf ihrem jeweiligen Ventilsitz 2, 3 eine ausreichende Abdichtung gewährleisten.

Das Ventilgehäuse 1 weist ferner einen Entlüftungsanschluß 7, einen Druckanschluß 8 und einen Arbeitsanschluß 9 auf, wobei der Entlüftungsanschluß 7 am zweiten Ventilsitz 3 und der Druckanschluß 8 am ersten Ventilsitz 2 in der Ventilkammer 10 mündet. Die beiden Ventilsitze 2, 3 sind im Bereich eines Bodens 10a der Ventilkammer 10 angeordnet. In diesem Boden mündet zudem auch der Arbeitsanschluß 9. Das dargestellte Mehrwegeventil stellt somit wahlweise die Verbindung zwischen Entlüftungsanschluß 7 und Arbeitsanschluß 9 bzw. Druckanschluß 8 und Arbeitsanschluß 9 her.

Das Betätigungselement 4 ist balkenförmig ausgebildet und stützt sich am Boden 10a der Ventilkammer 10 über wenigstens einen von zwei Ansätzen 4a, 4b ab. Die beiden Schließkörper 5, 6 sind jeweils an einem Endbereich auf der dem Boden 10a zugewandten Seite des Betätigungselementes angebracht. Das Betätigungselement 4 ist leicht gebogen oder geknickt ausgebildet, so daß in beiden Schaltstellungen jeweils der eine Schließkörper dicht auf dem zugehörigen Ventilsitz aufsitzt und der jeweilige andere Schließkörper mit ausreichendem Hub von seinem Ventilsitz abgehoben ist. Die sich auf dem Boden 10a abstützenden Ansätze 4a, 4b bilden die beiden Schwenkachsen des Betätigungselementes, wobei sich das Betätigungselement beim Schwenken von der einen zur anderen Schaltstellung zunächst um die eine und anschließend um die andere Schwenkachse dreht.

Die Steuerung des Schwenkvorganges des Betätigungselements wird durch eine mit diesem zusammenwirkende Betätigungseinrichtung bewirkt. Im dargestellten Ausführungsbeispiel wird die Betätigungseinrichtung beispielhaft durch einen Elektromagnet 11 gebildet, der im wesentlichen aus einer Magnetspule 12, einem Joch 13 und einem Klappanker 14 besteht. Die Anregung des Elektromagneten 11 erfolgt über Anschlüsse 15, wobei der Klappanker 14 dann von seiner in Fig.1 abgeklappten Stellung gegen die Kraft eines Federelements 16 an den Elektromagnet 11 angeklappt wird.

Der Klappanker 14 ist daher zur Durchführung der Klappbewegung an seinem vom Federelement 16 entfernten Ende in geeigneter Weise schwenkbeweglich gehaltert.

Im Bereich seines freien Endes steht der Klappanker 14 auf seiner dem Elektromagnet 11 abgewandten Seite mit dem Betätigungselement 4 in Kontakt. Ohne Anregung des Elektromagneten 11 wird der Klappanker 14 durch das Federelement 16 abgeklappt, wobei der Klappanker 14 über das Betätigungslement 4 den Schließkörper 5 auf seinen Ventilsitz 2 drückt.

Bei Anregung des Elektromagneten 11 wird der Klappanker 14 gegen die Kraft des Federelementes 16 an den Elektromagneten 11 angeklappt, so daß das Betätigungselement 4 mittels eines weiteren Federelementes 17 in die zweite Schaltstellung schwenkt, bei der der zweite Schließkörper 6 mit dem zweiten Ventilsitz 3 in Kontakt kommt.

Der Schwenkvorgang wird nachfolgend nochmals anhand der Fig.2 bis 4 näher erläutert.

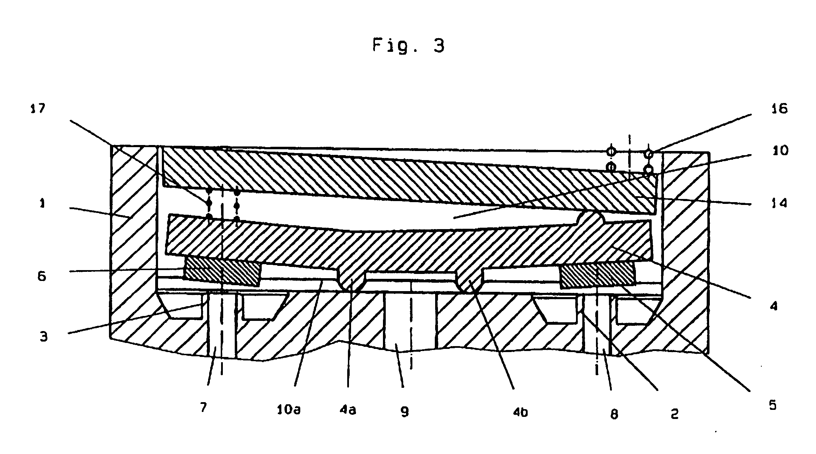

Die Stellung des Betätigungselements 4 gemäß Fig.2 entspricht der Stellung gemäß Fig.1, in der der Elektromagnet 11 stromlos ist. Fig.3 zeigt eine Zwischenstellung, bei der der Klappanker bereits teilweise angeklappt ist. In dieser Zwischenstellung sind beide Schließkörper 5, 6 von ihren Ventilsitzen 2, 3 abgehoben. In Fig.4 ist schließlich die zweite Schaltstellung dargestellt, bei der der Klappanker 14 an den Elektromagneten 11 angeklappt ist.

Um von der ersten Schaltstellung gemäß Fig.2 zur zweiten Schaltstellung gemäß Fig.4 zu gelangen, muß der Elektromagnet demnach lediglich den Klappanker 4 anklappen. Die Leistung des Elektromagneten muß dabei so groß gewählt werden, daß die dieser Bewegung entgegenwirkende Kraftkomponente des Federelementes 16 überwunden wird. Die eigentliche Schwenkarbeit wird jedoch im wesentlichen vom weiteren Federelement 17 geleistet.

An beiden Endbereichen des Betätigungselementes 4 sind daher Mittel zur Erzeugung einer auf das Betätigungselement wirkenden Kraftkomponente vorgesehen. Im den ersten Schließkörper 5 aufweisenden Endbereich werden diese Mittel durch den Klappanker 14 und das Federelement 16 und im den zweiten Schließkörper 6 aufweisenden Endbereich durch das weitere Federelement 17 gebildet.

Das Betätigungselement 4 wirkt beim Schwenkvorgang als zweiseitiger Hebel, der zwei Schwenkachsen aufweist, die zwischen den Mitteln zur Erzeugung einer auf das Betätigungselement 4 wirkenden Kraftkomponente angeordnet sind und durch die beiden sich am Boden 10a abstützenden Ansätze 4a, 4b des Betätigungselementes 4 gebildet werden. Beim dargestellten Ausführungsbeispiel ist der Boden 10a im Bereich der Ansätze 4a, 4b des Betätigungselementes entsprechend komplimentär zu den Ansätzen ausgebildet, um dem Betätigungselement 4 eine eindeutige Lage innerhalb der Ventilkammer 10 zuzuordnen.

Um von der in Fig.2 dargestellten ersten Schaltstellung in die in Fig.4 dargestellte zweite Schaltstellung zu gelangen, ist zunächst der Ansatz 4b als Schwenkachse wirksam. Dadurch ergibt sich (gemäß Fig.4) zwischen dem Federelement 17 und der Schwenkachse 4b ein Hebelarm l_{1b}, der größer ist, als der zwischen Schwenkachse 4b und erstem Schließkörper 5 gebildete Hebelarm l_{2b}.

Sobald der erste Schließkörper 5 etwas vom ersten Ventilsitz 2 abgehoben ist, beginnt ein etwaiges Fluid zu strömen. Das Betätigungselement befindet sich in diesem Stadium in der in Fig.3 dargestellten Zwischenstellung, bei der sich das Betätigungselement 4 auf beiden Ansätzen 4a, 4b abstützt. Für den weiteren Schwenkvorgang bildet nun der Ansatz 4a die wirksame Schwenkachse. Die sich hierdurch ergebenden ungünstigeren Hebeverhältnisse werden jedoch durch die Fluidströmung kompensiert. Der zwischen Ansatz 4a und Federelement 17 ausgebildete Hebelarm l₁ₐ ist somit kleiner als der zwischen Ansatz 4a und erstem Schließkörper 5 ausgebildete Hebelarm l₂ₐ. Aufgrund der veränderten Hebelverhältnisse kann der Schließköper 5 im zweiten Teil des Schwenkvorgangs einen größeren Hub ausführen. Während der erste Schließkörper 5 am Ende des Schwenkvorganges mit ausreichendem Hub von seinem Ventilsitz 2 abgehoben ist, dichtet der zweite Schließkörper 6 den zweiten Ventilsitz 3 ab.

Um wiederum von der in Fig.4 gezeigten zweiten Schaltstellung zurück zur ersten Schaltstellung gemäß Fig.2 zu gelangen, muß zunächst der Elektromagnet 11 ausgeschaltet werden, wobei der Klappanker 14 durch die Feder 16 nach unten gedrückt wird und dabei den Schwenkvorgang ausführt.

Das Federelement 16 muß somit nicht nur den anstehenden Druck im Bereich des zweiten Ventilsitzes, sondern auch die Kraft des weiteren Federelements 17 überwinden. Das Federelement 16 muß dementsprechend eine größere Kraftkomponente erzeugen. Bei diesem Schwenkvorgang wirken die zwei Schwenkachsen des Betätigungselementes 4 unterstützend.

Wie Fig.4 erkennen läßt, bildet der Ansatz 4a die zunächst wirksame Schwenkachse, wobei der mit der Kraft des Federelements 16 zusammenwirkende Hebelarm l₂ₐ größer ist als der zwischen Schwenkachse (Ansatz 4a) und zweitem Schließkörper 6 gebildete Hebelarm l₁ₐ.

In der Zwischenstellung findet wiederum ein Wechsel der Schwenkachsen statt, wobei zu diesem Zeitpunkt die Fluidströmung einsetzt und sich somit der Kraftbedarf verringert.

Aufgrund der sich durch die beiden Schwenkachsen ergebenden günstigen Hebelverhältnisse kann das Federelement 16 kleiner ausgelegt werden. Der Elektromagnet 11 muß nur so stark ausgelegt werden, daß er den Klappanker 14 entgegen der Kraft des Federelements 16 anklappen kann. Ein Federelement 16 mit geringerer Federkraft ermöglicht somit auch einen Elektromagneten mit entsprechend verringerter Leistung.

## Patentansprüche

1. Mehrwegeventil mit
- einem Ventilgehäuse (1), in dem ein erster und ein zweiter Ventilsitz (2, 3) ausgebildet ist,
- einem Betätigungselement (4), das einen ersten und einen zweiten, mit jeweils einem der beiden Ventilsitze (2, 3) zusammenwirkenden Schließkörper (5, 6) aufweist und das derart schwenkbar gelagert ist, daß in einer ersten Schaltstellung der erste Schließkörper (5) mit dem ersten Ventilsitz (2) und in einer zweiten Schaltstellung der zweite Schließkörper (6) mit dem zweiten Ventilsitz (3) in Kontakt kommt,
**dadurch gekennzeichnet, daß** das Betätigungselement (4) zwei Schwenkachsen (4a, 4b) aufweist, wobei sich das Betätigungselement beim Schwenken von der einen zur anderen Schaltstellung zunächst um eine und anschließend um die andere Schwenkachse dreht.

2. Mehrwegeventil nach Anspruch 1, **dadurch gekennzeichnet, daß** ein erstes Federelement (17) vorgesehen ist, das das Betätigungselement (4) in die eine Schaltstellung drängt.

3. Mehrwegeventil nach Anspruch 1, **gekennzeichnet durch** eine zum Schwenken des Betätigungselements (4) mit diesem zusammenwirkende Betätigungseinrichtung.

4. Mehrwegeventil nach Anspruch 1, **dadurch gekennzeichnet, daß** die beiden Schließkörper (5, 6) an gegenüberliegenden Enden des Betätigungselements (4) angeordnet sind.

5. Mehrwegeventil nach Anspruch 1, **dadurch gekennzeichnet, daß** die beiden Schließkörper (5, 6) an gegenüberliegenden Enden des Betätigungselements (4) angeordnet sind und die beiden Schwenkachsen (4a, 4b) des Betätigungselements (4) zwischen den beiden Schließkörpern (5, 6) vorgesehen sind.

6. Mehrwegeventil nach Anspruch 1, **dadurch gekennzeichnet, daß** das Betätigungselement (4) als zweiseitiger Hebel ausgebildet ist.

7. Mehrwegeventil nach Anspruch 2, **dadurch gekennzeichnet, daß** ein zweites Federelement (16) vorgesehen ist, daß das Betätigungselement (4) gegen die Kraft des ersten Federelements (17) in die andere Schaltstellung drängt.

8. Mehrwegeventil nach Anspruch 1, **dadurch gekennzeichnet, daß** das Betätigungselement balkenförmig ausgebildet ist, wobei die Schließkörper (5, 6) jeweils an einem Ende des Betätigungselementes (4) angebracht sind und ferner an jedem der beiden Enden Mittel zur Erzeugung einer auf das Betätigungselement wirkenden Kraftkomponente vorgesehen sind.

9. Mehrwegeventil nach Anspruch 8, **dadurch gekennzeichnet, daß** jeweils beim Anheben eines Schließkörpers von seinem zugehörigen Ventilsitz die Mittel zur Erzeugung der hierfür erforderlichen Kraftkomponente am gegenüberliegenden Endbereich derart in bezug auf die wirksame Schwenkachse angeordnet sind, daß der zwischen der wirksamen Schwenkachse und den Mitteln zur Erzeugung der Kraftkomponente gebildete Hebelarm größer ist als der zwischen der wirksamen Schwenkachse und dem Schließkörper gebildete Hebelarm.

10. Mehrwegeventil nach Anspruch 3, **dadurch gekennzeichnet, daß** die Betätigungseinrichtung durch einen Elektromagnet (11) mit einem Klappanker (14) gebildet wird, wobei der Klappanker mit dem Betätigungselement (4) zusammenwirkt.

11. Mehrwegeventil nach Anspruch 1, **gekennzeichnet durch** eine zum Schwenken des Betätigungselementes (4) mit diesem zusammenwirkende Betätigungseinrichtung, die **durch** einen Elektromagnet (11) mit einem Klappanker (14) gebildet wird, wobei der Klappanker mit dem Betätigungselement derart zusammenwirkt, daß der Klappanker (14) in der aufgeklappten Stellung das Betätigungselement (4) in der ersten Schaltstellung hält und in der angeklappten Stellung das Betätigungselement (4) freigibt und dieses **durch** ein Federelement (17) in die zweite Schaltstellung schwenkbar ist.

12. Mehrwegeventil nach Anspruch 11, **dadurch gekennzeichnet, daß** ein Federelement (16) vorgesehen ist, das den Klappanker (14) in die aufgeklappte Stellung drängt.

13. Mehrwegeventil nach Anspruch 1, **dadurch gekennzeichnet, daß** das Ventilgehäuse (1) eine Ventilkammer (10) aufweist, in der das Betätigungselement (4) lose gehaltert ist.

14. Mehrwegeventil nach Anspruch 13, **dadurch gekennzeichnet, daß** die Ventilkammer (10) einen Boden (10a) aufweist, wobei die beiden Schwenkachsen durch zwei Kontaktbereiche zwischen Befestigungselement (4) und Boden (10a) gebildet werden.

## Claims

1. Multiple-way valve comprising
- a valve housing (1) in which a first and a second valve seat (2, 3) are formed,
- an operating element (4) that has a first and a second closing body (5, 6) each co-operating with one of the two valve seats (2, 3) and that is pivotally mounted in such a manner that, when in a first switch position, the first closing body (5) comes into contact with the first valve seat (2) and, when in a second switch position, the second closing body (6) comes into contact with the second valve seat (3),
**characterised in that** the operating element (4) has two pivot axes (4a, 4b), the operating element turning, when pivoting from the one to the other switch position, first about one and then about the other pivot axis.

2. Multiple-way valve according to claim 1, **characterised in that** a first spring element (17) is provided which urges the operating element (4) into the one switch position.

3. Multiple-way valve according to claim 1, **characterised by** an operating device that co-operates with the operating element (4) in order to pivot it.

4. Multiple-way valve according to claim 1, **characterised in that** the two closing bodies (5, 6) are arranged at opposite ends of the operating element (4).

5. Multiple-way valve according to claim 1, **characterised in that** the two closing bodies (5, 6) are arranged at opposite ends of the operating element (4) and the two pivot axes (4a, 4b) of the operating element (4) are provided between the two closing bodies (5, 6).

6. Multiple-way valve according to claim 1, **characterised in that** the operating element (4) is constructed in the form of double-ended lever.

7. Multiple-way valve according to claim 2, **characterised in that** a second spring element (16) is provided which urges the operating element (4) into the other switch position against the force of the first spring element (17).

8. Multiple-way valve according to claim 1, **characterised in that** the operating element is of beam-shaped construction, the closing bodies (5, 6) each being attached to one end of the operating element (4), and means for producing a force component acting on the operating element also being provided at each of the two ends.

9. Multiple-way valve according to claim 8, **characterised in that**, when a closing body is lifted from its associated valve seat, the means for producing the force component necessary for that purpose at the opposite end region are arranged in relation to the active pivot axis in such a manner that the lever arm formed between the active pivot axis and the means for producing the force component is larger than the lever arm formed between the active pivot axis and the closing body.

10. Multiple-way valve according to claim 3, **characterised in that** the operating device is formed by an electromagnet (11) having a pivoted armature (14), the pivoted armature co-operating with the operating element (4).

11. Multiple-way valve according to claim 1, **characterised by** an operating device which co-operates with the operating element (4) in order to pivot it and which is formed by an electromagnet (11) having a pivoted armature (14), the pivoted armature co-operating with the operating element in such a manner that the pivoted armature (14) in the open position holds the operating element (4) in the first switch position and, in the turned-up position, releases the operating element (4) and the latter can be pivoted into the second switch position by a spring element (17).

12. Multiple-way valve according to claim 11, **characterised in that** a spring element (16) is provided which urges the pivoted armature (14) into the open position.

13. Multiple-way valve according to claim 1, **characterised in that** the valve housing (1) has a valve chamber (10) in which the operating element (4) is held loosely.

14. Multiple-way valve according to claim 13, **characterised in that** the valve chamber (10) has a base (10a), the two pivot axes being formed by two regions of contact between fastening element (4) and base (10a).

## Revendications

1. Soupape à plusieurs voies, comportant
- un boîtier de soupape (1) dans lequel sont réalisés un premier et un deuxième siège de soupape (2, 3),
- un élément d'actionnement (4) qui comprend un premier et un deuxième corps obturateur (5, 6) coopérant respectivement avec l'un des deux sièges de soupape (2, 3) et qui est monté mobile en basculement de telle sorte que dans une première position de commutation le premier corps obturateur (5) vient en contact avec le premier siège de soupape (2) et dans une deuxième position de commutation le deuxième corps obturateur (6) vient en contact avec le deuxième siège de soupape (3),
**caractérisée en ce que** l'élément d'actionnement (4) comprend deux axes de basculement (4a, 4b), et lors du basculement depuis l'une des positions de commutation jusqu'à l'autre l'élément d'actionnement tourne tout d'abord autour de l'un des axes de basculement et ensuite autour de l'autre.

2. Soupape à plusieurs voies selon la revendication 1, **caractérisée en ce qu'**il est prévu un premier élément de ressort (17) qui repousse l'élément d'actionnement (4) dans l'une des positions de commutation.

3. Soupape à plusieurs voies selon la revendication 1, **caractérisée par** un dispositif d'actionnement coopérant avec l'élément d'actionnement (4) pour le faire basculer.

4. Soupape à plusieurs voies selon la revendication 1, **caractérisée en ce que** les deux corps obturateurs (5, 6) sont agencés à des extrémités opposées de l'élément d'actionnement (4).

5. Soupape à plusieurs voies selon la revendication 1, **caractérisé en ce que** les deux corps obturateurs (5, 6) sont agencés à des extrémités opposées de l'élément d'actionnement (4), et **en ce que** les deux axes de basculement (4a, 4b) de l'élément d'actionnement (4) sont prévus entre les deux corps obturateurs (5, 6).

6. Soupape à plusieurs voies selon la revendication 1, **caractérisé en ce que** l'élément d'actionnement (4) est réalisé sous la forme d'un levier à deux bras.

7. Soupape à plusieurs voies selon la revendication 2, **caractérisé en ce qu'**il est prévu un deuxième élément de ressort (16) qui repousse l'élément d'actionnement (4) jusque dans l'autre position de commutation à l'encontre de la force du premier élément de ressort (17).

8. Soupape à plusieurs voies selon la revendication 1, **caractérisé en ce que** l'élément d'actionnement est réalisé en forme de barre, les corps obturateurs (5, 6) étant agencés chacun à une extrémité de l'élément d'actionnement (4), et **en ce qu'**il est prévu en outre à chacune des deux extrémités des moyens pour générer une composante de force agissant sur l'élément d'actionnement.

9. Soupape à plusieurs voies selon la revendication 8, **caractérisé en ce que** lors du soulèvement d'un corps obturateur depuis son siège de soupape associé, les moyens de génération de la composante de force nécessaire à cet effet sont agencés dans la zone d'extrémité opposée par rapport à l'axe de basculement actif de telle sorte que le bras de levier formé entre l'axe de basculement actif et les moyens de génération de composante de force est supérieur au bras de levier formé entre l'axe de basculement actif et le corps obturateur.

10. Soupape à plusieurs voies selon la revendication 3, **caractérisé en ce que** le dispositif d'actionnement est formé par un électroaimant (11) comportant une armature rabattable (14), l'armature rabattable coopérant avec l'élément d'actionnement (4).

11. Soupape à plusieurs voies selon la revendication 1, **caractérisé par** un dispositif d'actionnement coopérant avec l'élément d'actionnement (4) pour le faire basculer, qui est formé par un électroaimant (11) avec une armature rabattable (14), l'armature rabattable coopérant avec l'élément d'actionnement de telle sorte que dans la position rabattue ouverte l'armature rabattable (14) maintient l'élément d'actionnement (4) dans la première position de commutation, et que dans la position rabattue fermée elle libère l'élément d'actionnement (4) et celui-ci peut basculer jusque dans la deuxième position de commutation par un élément de ressort (17).

12. Soupape à plusieurs voies selon la revendication 11, **caractérisé en ce qu'**il est prévu un élément de ressort (16) qui repousse l'armature rabattable (14) jusque dans la position rabattue ouverte.

13. Soupape à plusieurs voies selon la revendication 1, **caractérisé en ce que** le boîtier de soupape (1) comprend une chambre de soupape (10) dans laquelle l'élément d'actionnement (4) est maintenu de façon lâche.

14. Soupape à plusieurs voies selon la revendication 13, **caractérisé en ce que** la chambre de soupape (10) comprend un fond (10a), les deux axes de basculement étant formés par deux zones de contact entre l'élément d'actionnement (4) et le fond (10a).
